Europäisches Patentamt

European Patent Office

Office européen des brevets

(19)

(11) Veröffentlichungsnummer: **0 332 829**

**A2**

(12) # EUROPÄISCHE PATENTANMELDUNG

(21) Anmeldenummer: 89101708.9

(22) Anmeldetag: 01.02.89

(51) Int. Cl.⁴: **G01F 15/08 , G01F 1/74**

(30) Priorität: **10.03.88 HU 114588**

(43) Veröffentlichungstag der Anmeldung:
**20.09.89 Patentblatt 89/38**

(84) Benannte Vertragsstaaten:
**AT BE CH DE ES FR GB GR IT LI LU NL SE**

(71) Anmelder: **VEGYIMÜVEKET EPITÖ ES SZERELÖ VALLALAT**
**Erzsébet királyné utja 1/c**
**Budapest XIV(HU)**

(72) Erfinder: **Pintér, Kálmán**
**Hengermalom u. 5/8**
**XI Budapest(HU)**

(74) Vertreter: **Füchsle, Klaus, Dipl.-Ing. et al**
**Hoffmann . Eitle & Partner Patentanwälte**
**Arabellastrasse 4**
**D-8000 München 81(DE)**

(54) **Vorrichtung zur Messung der Ergiebigkeit von Ölbrunnen.**

(57) Die Erfindung betrifft eine Vorrichtung zur kontinuierlichen zuverlässigen Messung der Ergiebigkeit von Ölbrunnen, die einen zweiphasigen Separator, ein an den Flüssigkeitsausfluss des Separators angeschlossen Gerät (16) zur Messung der Flüssigkeitergiebigkeit und einen damit verbundenem Wassergehaltsmesser (17), ein an den Gasausfluss des Separators (3) angeschlossenes Gerät (9) zur Messung der Gasergiebigkeit, und einen an den Gasauslass, bzw. Flüssigkeitsauslass der Geräte (9, 16) zur Messung der Gasergiebigkeit, bzw. der Flüssigkeitsergiebigkeit angeschlossenen Mischer (11) aufweist. Zur Gewährleistung der kontinuierlichen Messung und Förderung ist die Vorrichtung mit einem vereinigten Flüssigkeitspegel- und Druckregler versehen, der aus einem für den Flüssigkeitspegel empfindlichen Schwimmer (21) und aus zwei, mit dem Schwimmer in mit bewegender Zwangsverbindung stehenden, druckentlasteten Schiebern (19, 20) besteht.

Fig.1

## VORRICHTUNG ZUR MESSUNG DER ERGIEBIGKEIT VON ÖLBRUNNEN

Die Erfindung betrifft eine Vorrichtung zur kontinuierlichen Messung der Flüssigkeit - und Gasergiebigkeit von Ölbrunnen.

Die planmässige Ausbeute stellt die Voraussetzung der wirtschaftlichen Ausgewinnung eines Ölfelds dar. Ein sinnmässer Plan der Ausbeutung kann jedoch nur aufgrunde der im Laufe der Ausrichtung gewonnenen Messerfahrungen über das Kohlenwasserstofflager zusammengestellt werden. Bei der Zusammenstellung des Plans ist die Kenntnis der Charakteristiken des Kohlenwasserstofflagers besonders wichtig. Die Ergiebigkeit des Ölbrunnens ist in dieser Hinsicht die wichtige Charakteristik. Eine geeignete Information über die Ergiebigkeit des Ölbrunnens kann nur durch individuelle kontinuierliche Messung gewonnen werden. Dementsprechend stellt die kontinuierliche Messung der Ergiebigkeit des Brunnens und sonstiger Parameter eine allgemein bestehende Forderung dar.

Die gegenüber der Messung der Ergiebigkeit des Ölbrunnens gestellten wichtigsten Forderungen sind die folgenden:
- kontinuierliche Messung, - niedriger Widerstand, - weitgehende Zuverlässigkeit, - Möglichkeit der Betriebsführung ohne ständige Beaufsichtigung, - verhältnissmässig niedriger Aufwand.

Geräte zur Messung der Ergiebigkeit, die die obigen Forderungen zu befriedigen bestreben, sind bekannt. Gruppenweise angeordnete Messgeräte zur Messung der Brunnenenergiebigkeit, die auf Sammelstationen, Bohrinseln in Brunnengruppen aufgestellt werden, haben sich weitgehend verbreitet. Das Grundprinzip der gruppenweise angeordneten, zur Messung der Ergiebigkeit der Brunnen dienenden Geräte besteht darin, dass die Ergiebigkeit des Brunnens durch zweiphasige Abtrennung in Flüssigkeit und Gas oder durch dreiphasige Abtrennung in Öl, Wasser und Gas separiert wird. Dementsprechend wird das aus Flüssigkeit und Gas zusammengesetzte, aus dem Ölbrunnen zu Tage geförderte Gemisch mit einem zweiphasigen oder dreiphasigen Separator getrennt. Nach erfolgter zweiphasiger Trennung der Flüssigkeits - bzw. Gaskomponenten wird der Wassergehalt bzw. Ölgehalt der Flüssigkeit mit einem separaten Messgerät bestimmt Die sich auf die einzelnen Komponenten des gewonnenen Gemisches beziehende Ergiebigkeit wird durch Messung der Ergiebigkeit, kontinuierliche Messung des Volumens (der Kubatur) oder der Masse bestimmt. Die Genauigkeit der Messung der Brunnenergiebigkeit wird durch die angewendeten Messgeräte, Messverfahren und durch die Messdauerbestimmt.

Die Facharbeit von L.J.Lazovszkij, S.M.Szmotrickij: "Automatizacija merénja produkci nyeftjanik skvazsin" gibt eine gute Übersicht der gegenwärtig verwendeten Geräte zur Messung der Brunnenergiebigkeit.

In dieser Studie wird die ebenfalls weitverbreitete Methode überhaupt nicht erwähnt, deren wesentliche Charakteristik darin besteht, dass auf der Sammelstation zwei dreiphasige Messeparatoren betrieben werden, aus denen der eine mit grösserer, der andere mit niedrigerer Kapazität arbeitet. Der Messeparator von höherer Kapazität misst die gesamte Ergiebigkeit aller der Sammelstation angeschlossenen Ölbrunnen, während der Messseparator von niedrigerer Kapazität die Ergiebigkeit der einzelnen Brunnen periodisch separat misst. So besteht der Nachteil der Methode darin, dass die Möglichkeit der kontinuierlichen Messung der einzelnen Brunnen nicht gegeben wird.

Aus der GB-C 21 79 156 ist ein Messgerät zur Messung der Ergiebigkeit von Brunnen bekannt, das die kontinuierliche Messung bei gleichzeitiger Eliminierung des Separators zu lösen bestrebt. Wie es aus dem Dokument hervorgeht, enthält die Vorrichtung einen kleindimensionierten Separator, d.h. die vollkommene Beseitigung des Separators konnte auch hier nicht gelöst werden.

Die auf die kontinuierliche und zuverlässige Messung der Ergiebigkeit von Ölbrunnen gerichteten Versuche erzielen - wie es aus der Fachliteratur hervorgeht -auch heute die Beseitigung der Separatoren, die Realisierung der Ergiebigkeitmessung ohne Separatoren. Eine Publikation, die eine auch in der Praxis anwendbare, zur Realisierung der Zielsetzung geeignete Lösung anbieten könnte, ist jedoch unbekannt.

Ziel der Erfindung ist es, eine Vorrichtung bzw. ein Messgerät zu entwickeln, die bzw. das eine kontinuierliche Messung der Brunnenergiebigkeit gewährleistet, mit höchster Zuverlässigkeit und niedrigem Strömungswiderstand gekennzeichnet ist, ohne die Notwendigkeit der ständigen Aufsicht arbeitet und mit einem niedrigen Aufwand realisierbar ist.

Zur Lösung der gestellten Aufgabe wurde eine Vorrichtung zur Messung der Ergiebigkeit von Ölbrunnen entwickelt, die einen sich an den Eintrittsstutzen - der das aus dem Ölbrunnen gewonnene Gemisch von Flüssigkeit und Gas fördert - angeschlossenen zwei phasigen Separator, ein an den Flüssigkeitsausfluss des Separators angeschlossenes Gerät zur Messung der Flüssigkeitsergiebigkeit und ein damit verbundenes Gerät zur Messung des Wassergehalts , desweiteren ein an den Gasauslass des Separators angeschlossenes Gerät zur Messung der Gasergiebigkeit aufweist , an die Geräte zur Messung der Flüssigkeit bzw, des Wassergehalts und der Gasergiebigkeit ein Mischer angeschlossen ist, wobei die erfindungsgemässe Vorrichtung mit einem vereinigten Flüssigkeitspegel- und Druckregler versehen ist, der aus einem für den Flüssigkeitspegel empfindlichen Schwimmer und aus mindestens zwei, mit dem Schwimmer mitbewegenden, damit in Zwangsverbindung stehenden druckentlasteten Schiebern besteht, wobei die Schieber in die Gasförderleitung und die Flüssigkeitsförderleitung nach dem Separator eingebaut sind und die Ausflussquerschnitte des Gasauslasses bzw, des Flüssigkeitauslasses des Separators entsprechend der Position des Schwimmers regeln.

Der vereinigte Flüssigkeitspegel - und Druckregler kann unmittelbar in dem Separator oder auch ausserhalb des Separators nach den Geräten zur Messung der Flüssigkeitsergiebigkeit bzw. des Wassergehalts und der Gasergiebigkeit in einer separaten Armatur angeordnet werden. Als Messgeräte zur Messung der Flüssigkeit- und der Gasergiebigkeit werden vorzugsweise Messblenden angewendet, deren Vorteil darin besteht, dass sie keine bewegliche Elemente enthalten, mit befriedigender Zuverlässigkeit und Genauigkeit arbeiten und ihr Messbereich zwischen weiten Grenzen geändert werden kann. Zur Bestimmung des Wassergehaltes der ausgeschiedenen Flüssigkeitskomponente wird ebenfalls ein an sich bekanntes Messgerät, so z.B. ein direkter Wassergehaltsmesser oder ein Messgerät, welches den Wassergehalt aufgrund eines anderen physika lischen Parameters durch Berechnung indirekt bestimmt, gewählt. Die Funktion der erfindungsgemässen Vorrichtung wird zweckmässig mit einer Mikroprozessor-Computer/Steuereinheit gesteuert, die aufgrund der erhaltenen Messergebnisse die erfoderlichen Berechnungen durchführt, zum Empfang zentraler Befehle geeignet ist und aufgrund deren die periodische Ausbeutung des Ölbrunnens nach dem vorgegebenen Programm steuert.

Die Erfindung wird anhand der beiliegenden Zeichnung näher erläutert. In der Zeichnung zeigen:

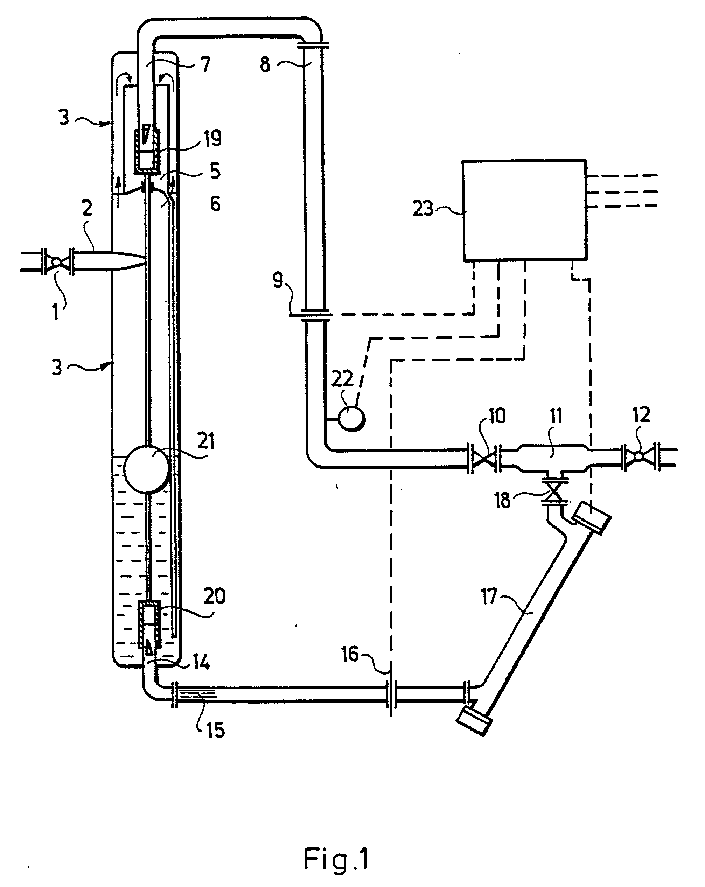

-Figuren 1 bis 4: Blockschemata von je einem Ausführungsbeispiel der erfindungsgemässen Vorrichtung zur Messung der Ergiebigkeit von Ölbrunnen.

Wie es aus der Zeichnung hervorgeht, weist die erfindungsgemässe Vorrichtung einen zweiphasigen Separator 3 auf, in den das aus dem Ölbrunnen gewonnene, aus Flüssigkeit und Gas bestehende Gemisch über die Verschlussarmatur 1 und den tangentiellen Eintrittsstutzen 2 eintritt. Innerhalb des Separators 3 gelangt das Gas in einen Tropfenseparator 5, der mit einem Drallelement versehen ist. Aus dem Tropfenseparator 5 gelangt die abgeschiedene Flüssigkeit über eine Leitung 6 in einen unteren Flüssigkeitsraum 13 des Separators 3. Das Gas strömt über einen Spalt, der mittels eines druckentlasteten Schiebers 19 des vereinigten Flüssigkeitspegel- und Druckreglers geregelt ist, in den Gasauslassstutzen 7 des Separators 3, wovon es über einen Stromregler 8, einen Gasergiebigkeitsmesser 9 (vorteilhaft eine Messblende) und ein Rückschlagventil 10 in einen Mischer 11 gelangt. In der Gasförderleitung ist ein Temperaturfühler 22 eingebaut. Die aus dem Flüssigkeit-Gasgemisch abgeschiedene Flüssigkeit sammelt sich in dem unteren Flüssigkeitsraum 13 des Separators 3 an. Von hier strömt die Flüssigkeit über einen Spalt, der mittels eines druckentlasteten Schiebers 20 des vereinigten Flüssigkeitspegel- und Druckreglers geregelt ist, über einen Flüssigkeitauslassstutzen 14 und einen Stromregler 15 in einen Flüssigkeitsergiebigkeitsmesser 16 (vorzugsweise Messblende). Aus dem Flüssigkeitsergiebigkeitsmesser 16 strömt die Flüssigkeit durch einen Wassergehaltsmesser 17, wovon sie über ein Rückschlagventil 18 in den Mischer 11 gelangt. In dem Mischer 11 wird die Flüssigkeit und das Gas wieder vermischt, wonach das Gemisch über eine Verschlussarmatur 12 in einen hier nicht dargestellten Kollektor strömt.

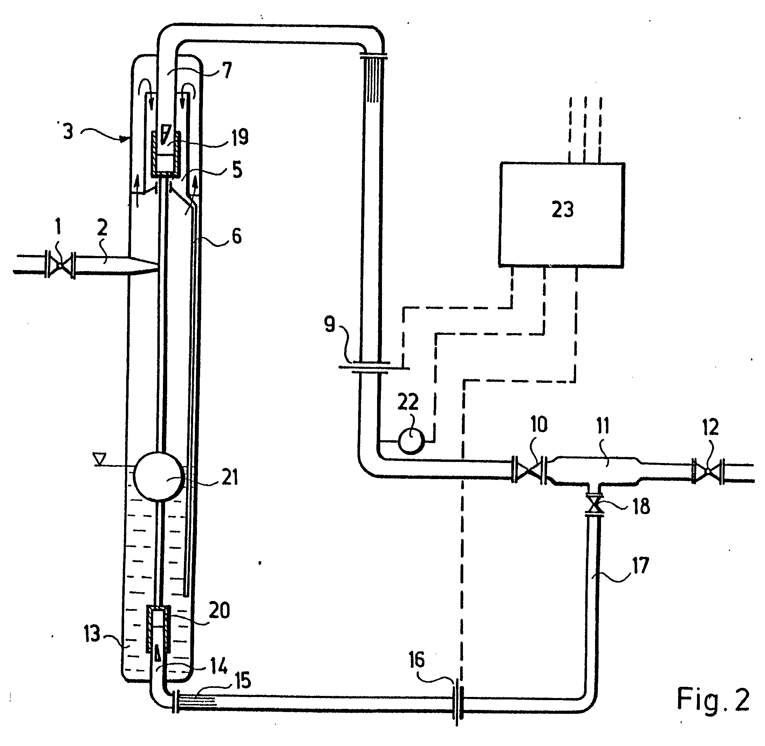

Die druckentlasteten Schieber 19 und 20 des vereinigten Flüssigkeitspegel- und Druckreglers stehen mit einem ebenfalls in dem Separator 3 angeordneten Schwimmer 21 (Fig. 1 und 2) in einer mitbewegenden Zwangsverbindung.

Die Vorrichtung weist eine Mikroprozessor Computer/Steuereinheit 23 auf, die mit dem Gasergiebigkeitsmesser 9, mit dem Flüssigkeitsergiebigkeitsmesser 16, mit dem Wassergehaltsmesser 17 und dem Temperaturfühler 22, sowie mit den Verschlussarmaturen 1 und 12 in Steuersignalverbindung steht.

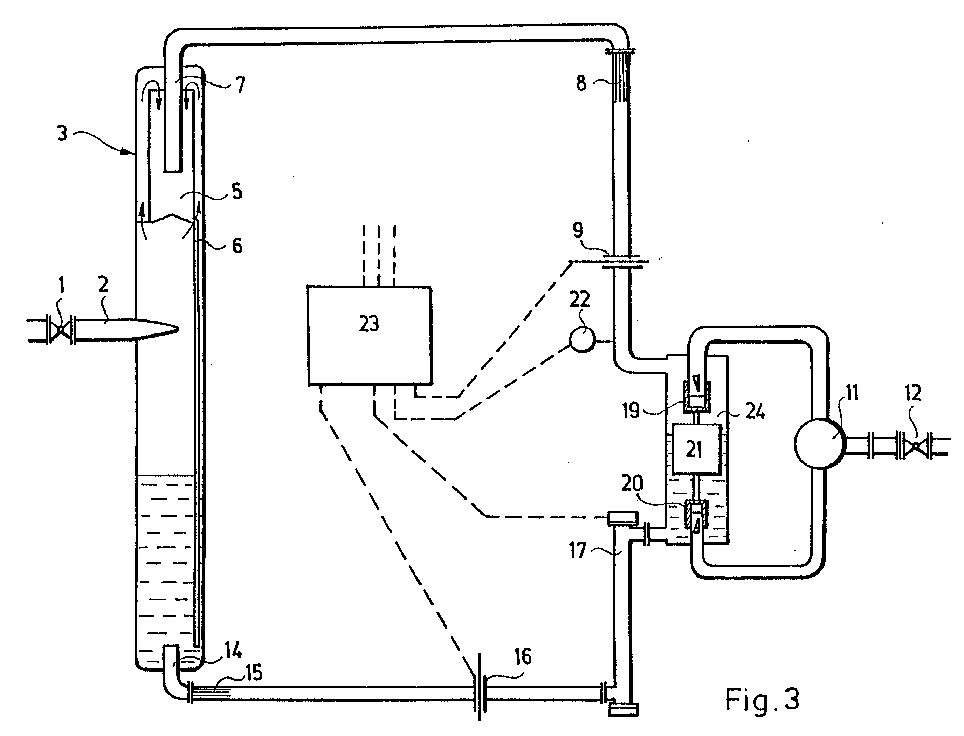

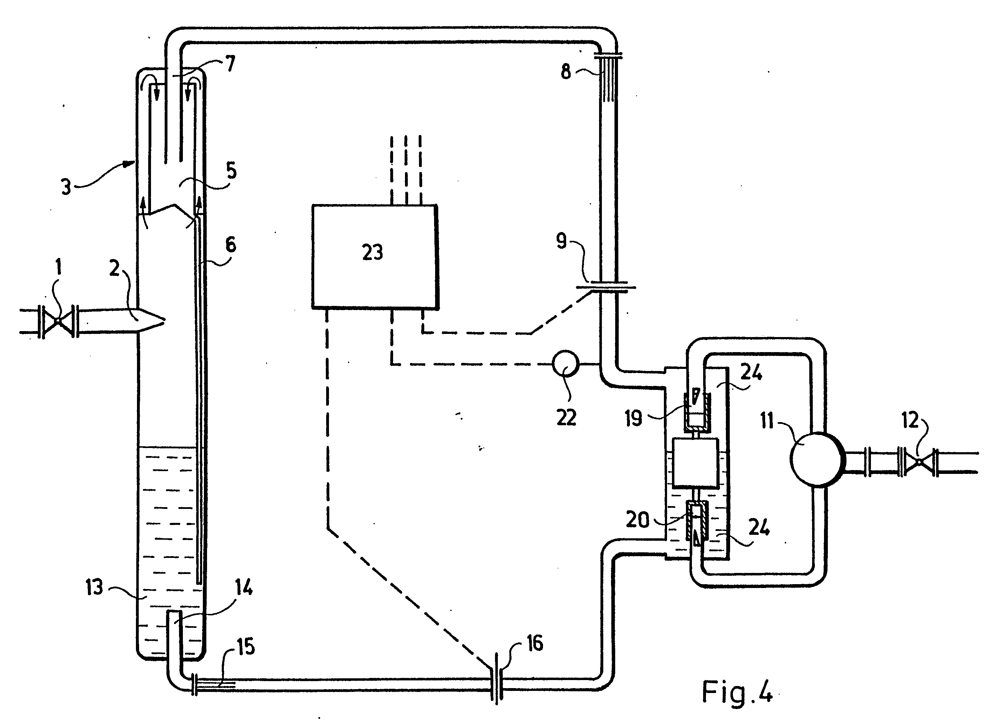

In der erfindungsgemässen Vorrichtung kann der vereinigte Flüssigkeitspegel- und Druckregler auch ausserhalb des Separators 3 angeordnet werden (Fig 3 und 4). In diesem Fall ist der Schwimmer 21 in einer separaten,vertikalen Armatur 24 angeordnet, der oben mit der aus dem Gasergiebigkeitsmesser 9 kommende Gasförderleitung, unten mit der aus dem Flüssigkeitsergiebigkeitsmesser 16 kommenden Flüssigkeitsförderleitung verbunden ist. In der vertikal stehenden Armatur 24 sind die den Gasausfluss- bzw. den Flüssigkeitausfluss-Querschnitt regelnden, druckentlasteten Schieber 19 bzw. 20, die mit dem Schwimmer 21 in einer mitbewegenden Zwangsverbindung stehen, gleicherweise angeordnet: Der Schieber 19 ist an den oberen Ausfuhrstutzen, der Schieber 20 ist an den unteren Ausfuhrstutzen der Armatur 24 angeschlossen, wobei sie die Ausflussquerschnitte regeln. Der obere Ausfuhrstutzen ist über eine Gasförderleitung, der untere Ausfuhrstutzen ist über eine Flüssigkeitsförderleitung mit einem hier nicht dargestellten Kollektor verbunden.

Die erfindungsgemässe Vorrichtung kann auch ohne den Wassergehaltsmesser realisiert werden, wie es die Varianten nach Fig. 2 und 4 zeigen. In diesem Fall strömt das Gas, bzw. die Flüssigkeit aus dem Flüssigkeitergiebigkeitsmesser 16 direkt in den Mischer 11, bzw. die vertikale Armatur 24.

Die Wirkungsweise der erfindungsgemässen Vorrichtung ist folgende :
Die kontinuierliche Abfuhr der Flüssigkeit- und Gas-komponenten des Flüssigkeit-Gasgemisches wird durch die in dem Separator 3 bzw. in der separaten Armatur 24 angeordneten, mit dem Schwimmer 21 in mechanischer Verbindung stehenden Schieber 19 und 20 gewährleistet. Wenn nun der Flüssigkeitspegel steigt, hebt sich damit der Schwimmer 21 empor; er hebt den Schieber 20, wodurch der Ausflussquerschnitt der Flüssigkeit grösser wird. Simultan verkleinert ( drosselt) der den Ausflussquerschnitt des Gases regelnde Schieber 19 den Ausflussquerschnitt, worauf der Druck in dem Gasraum des Separators steigt (Fig. 1 und 2). Auf die gemeinsame Wirkung dieser Funktion der Schieber 19 und 20 tritt der vergrösserte Flüssigkeitsstrom über den Flüssigkeitauslassstutzen 14 aus dem Separator 3 aus. Wenn nun der Flüssigkeitspegel in dem Separator 3 sinkt, bewegt sich der Schwimmer abwärts, worauf der Schieber 19 den Ausflussquerschnitt des Gases öffnet, während der Schieber 20 den Ausflüssquerschnitt der Flüssigkeit drosselt. Als Erfolg bildet sich ein neuer Gleichgewichtszustand heraus, was bedeutet, dass das Transportsystem sich selbst reguliert. Wenn die Ausbeutung des Ölbrunnens aufhört, verhindern die Rückschlagventile 10 und 18 den Rückstrom aus dem Kollektor. Beim Anlass der Ausbeutung startet die Vorrichtung automatisch, ohne etwaige äussere Intervention.
Mit zweckdienlicher Programmierung der Computer/Steuereinheit 23 ist die erfindungsgemässe, zur Messung der Ergiebigkeit des Ölbrunnens dienende Vorrichtung für die Steuerung und Messung der periodischen Erdölgewinnung geeignet. Die einfachste Lösung ist die nach vorgegebe-nem Zeitprogramm durchgeführte Steuerung. In die-sem Fall lässt die Computer/Steuereinheit 23 die Pumpen des Systems an oder stellt sie ab nach einem vorbestimmten Zeitprogramm. Bei Gaslift-Gewinnung öffnet sie oder schliesst das Gaszufuhrventil und steuert die an der Gewinnung teilnehmenden Mittel des Systems.

Bei einer derartigen Steuerung ist es zweckmässig, die Verschlussarmatur als fernbetätigte Armatur auszugestalten.
Eine weitere Möglichkeit der Steuerung der periodischen Erdölgewinnung besteht darin, dass z.B. beim Erreichen eines gegebenen Ergiebigkeitswertes/Minimumwertes/ die Computer/Steuereinheit die Gewinnung abstellt und sie erst nach Ablauf einer vorbestimmten Zeit wieder in Gang setzt.
Die erfindungsgemässe Vorrichtung ist auch für die Optimierung einer Gaslift-Gewinnung bestens geeignet. In diesem Fall erübrigt sich die Messung des in den Brunnen dosierten Gases, da ein Messgerät die Ergiebigkeit des Ölbrunnens kontinuierlich misst.

Die erfindungsgemässe, zur Messung der Ergiebigkeit eines Ölbrunnens dienende Vorrichtung ermöglicht eine kontinuierliche Messung und ge-währleistet die sofortige Wahrnehme einer unregel-mässigen Funktion des Systems. Die kontinuierliche Regelung beansprucht weder in der Flüssigkeitsphase, noch in der Gasphase irgendwelche Hilfsenergie. Der geregelte Betrieb wird auch beim Stromausfall aufrechterhalten. Nach dem Aufhören des Stromausfalls ist keine äussere Intervention erforderlich.
Der Druckabfall innerhalb der Vorrichtung ist verhältnismässig niedrig; er entspricht immer der jeweiligen Ergiebigkeit.
Die Betätigung der Vorrichtung beansprucht weder Bedienung, noch ständige Überwachung. Der strukturelle Aufbau ist einfach, die Realisierung beansprucht einen verhältnismässig geringen Aufwand. Dank der kontinuierlichen Messung muss mit den bei periodischen Messmethoden auftretenden Messfehlern nicht gerechnet werden.

## Ansprüche

1. Vorrichtung zur Messung der Ergiebigkeit von Ölbrunnen, die einen zweiphasigen Separator, der an den aus dem Ölbrunnen stammende Flüssigkeit-Gasgemisch fördernden Eintrittsstutzen angeschlossen ist, ein an den Flüssigkeitsaufluss des Separators angeschlossenes Gerät zur Messung der Flüssigkeitsergiebigkeit, ein an den Gasausfluss des Separators angeschlossenes Gerät zur Messung der Gasergiebigkeit, und einen an den Gasauslass, bzw. Flüssigkeitauslass der Geräte zur Messung der Gasergiebigkeit bzw. der Flüs-sigkeitsergiebigkeit angeschlossenen Mischer auf-weist,
**dadurch gekennzeichnet,** dass die Vorrichtung mit einem vereinigten Flüssigkeitspegel- und Druckregler versehen ist, der aus einem für den Flüssigkeitspegel empfindlichen Schwimmer (21) und aus zwei, mit dem Schwimmer (21) in mit-bewegender Zwangsverbindung stehenden druckentlasteten Schiebern (19, 20) besteht, wobei die Schieber (19, 20) in den Gasausfluss und in den Flüssigkeitausfluss des Separators so eingebaut sind, dass sie die Ausflussquerschnitte des Gases und der Flüssigkeit in Abhängigkeit von der Position des Schwimmers (21) regeln.

2. Vorrichtung zur Messung der Ergiebigkeit von Ölbrunnen nach Anspruch 1,

**dadurch gekennzeichnet,** dass der Schwimmer (21) des vereinigten Flüssigkeitspegel-und Druckreglers in dem Separator (3) angeordnet ist, und die die Ausflussquerschnitte des Gasausflusses bzw, des Flüssigkeitausflusses regelnden Schieber (19,20) in den Gasauslassstutzen (7) bzw. Flüssigkeitauslassstutzen (14) des Separators (3) eingesetzt sind.

3. Vorrichtung zur Messung der Ergiebigkeit von Ölbrunnen nach Anspruch 1,

**dadurch gekennzeichnet,** dass der Schwimmer (21) des vereinigten Flüssigkeitspegel-und Druckreglers ausserhalb des Separators (3) in einer vertikalen Armatur (24) angeordnet ist, die an den Flüssigkeitausfluss des Gerätes (9) zur Messung der Flüssigkeitergiebigkeit und an den Gasausfluss des Gerätes (16) zur Messung der Gasergiebigkeit angeschlossen ist.

4. Vorrichtung zur Messung der Ergiebigkeit von Ölbrunnen nach einem der Ansprüche 1 bis 3, **dadurch gekennzeichnet,** dass die Geräte (9 und 16) zur Messung der Flüssigkeitergiebigkeit bzw. der Gasergiebigkeit als Messblenden ausgestaltet sind.

5. Vorrichtung zur Messung der Ergiebigkeit von Ölbrunnen nach einem der Ansprüche 1 bis 4, **dadurch gekennzeichnet,** dass das Gerät (16) zur Messung der Flüssigkeitergiebigkeit mit einem Wassergehaltsmesser (17) verbunden ist.

Fig.1

Fig. 2

Fig. 3

EP 0 332 829 A2

Fig.4

EP 0 332 829 A2